# EUROPEAN PATENT SPECIFICATION

(11) **EP 3 769 929 B1**
(45) Date of publication and mention of the grant of the patent: **01.06.2022**
(21) Application number: 20155645.3
(22) Date of filing: 05.02.2020
(51) Int. Cl.: B29C 45/27, B29C 45/28, B29C 45/72

(54) **VALVE GATE ASSEMBLY**
VERSCHLUSSDÜSENANORDNUNG
ENSEMBLE DE BUSE OBTURATRICE À AIGUILLE

(30) Priority: 21.07.2019 US 201916517616
(43) Date of publication of application: 27.01.2021
(73) Proprietor: INCOE Corporation USA, Auburn Hills MI 48326 (US)
(72) Inventor: Greb, Scott, Washington Township MI, 48094 (US); Jörg, Anton, 63762 Großostheim (DE); Christian, Striegel, 63512 Hainburg (DE)
(74) Representative: 2K Patentanwälte Blasberg Kewitz & Reichel

(56) References cited:
- EP-A1- 2 679 374
- CN-A- 108 859 011
- US-A1- 2016 082 634

## Description

### FIELD OF THE DISCLOSURE

This disclosure pertains to the use of an electric actuator for driving a hotrunner valve pin of an injection molding machine.

### BACKGROUND OF THE DISCLOSURE

Injection molding systems can be categorized as either hotrunner systems or cold runner systems. In the case of cold runner injection molding systems, channels for the flow of liquid resin are provided in at least one mold part (e.g., mold half) to facilitate delivery of liquid resin to a mold cavity defined by multiple mold parts. After the cavity is filled with liquid resin, the resin is cooled and solidifies or hardens to form a solid injection molded part. The resin inside the channels of the mold part also becomes solid, forming cold runners that are generally recycled or discarded. In a hotrunner system, the channels through which the liquid resin flows to the mold cavity are defined by a heated manifold and heated nozzles that maintain the resin in a liquid state throughout the production process. As a result, cold runners are not produced, substantially eliminating recycling and waste during normal production. Additionally, hotrunner systems provide faster cycle times and higher production rates. Hotrunner systems typically reduce the amount of labor or robotics needed for post-production activities such as runner and sprue removal, discardment and recycling. Thus, although the hotrunner mold systems tend to cost more than cold runner mold systems, the overall production costs per unit (part) can often be substantially less than with cold runner systems.

Surface defects due to shrinkage during cooling and solidification of the molded parts can be significantly reduced or eliminated when flow to the mold cavity is carefully controlled. In order to improve control of flow into the mold cavity of a hotrunner system, it is desirable to use electric actuators (motors) to regulate the valve pins that control flow from the nozzles, rather than the more conventionally employed hydraulic or pneumatic actuators. A problem with using electric motors to control flow through the hotrunners (manifold channels) is that the high temperatures at which the manifold and nozzles are maintained can adversely affect reliability, efficiency and service life of the electric motor. This problem has been previously addressed primarily by supporting the electric motor on one of the molding plates or other structure that is remote from the manifold during the molding cycle. These arrangements have generally added complexity to assembly and maintenance of the injection molding apparatuses. The documents EP 2 679 374 A1, US 2016/082634 A1, CN 108 859 Oil A disclose cooling structures of drives of hotrunner nozzles.

### SUMMARYOFTHEDISCLOSURE

The problems are solved by invention according to the claims. The disclosed valve gate assembly for an injection molding apparatus having hotrunners includes a heated manifold defining one or more resin channels for allowing flow of liquid resin from an injection molding machine, one or more hotrunner nozzles that are in fluid communication with a corresponding resin channel, and a valve pin configured for linear movement within and along a longitudinal axis of a corresponding nozzle to control flow of resin from the nozzle into a mold cavity. The valve pin is driven by an electric motor and transmission that are located on a cooling plate that is mounted on the heated manifold. This arrangement facilitates easier assembly and disassembly of the injection molding apparatus, reducing the time and expense associated with maintenance and repair of the apparatus.

### BRIEFDESCRIPTIONOFTHEDRAWINGS

Figure 1 is a front elevational view of a valve gate assembly in accordance with this disclosure.
Figure 2 is a side elevational view of the valve gate assembly shown in Figure 2.
Figure 2A is a side elevational view of a variation on the assembly shown in Figures 1 and 2.
Figure 3 is a perspective view of another embodiment of the disclosed valve gate assemblies.
Figure 4 is a front elevational view of the valve gate assembly shown in Figure 3.
Figure 5 is a side elevational view of the valve gate assembly shown in Figures 3 and 4.
Figure 6 is a perspective view of a third embodiment of the disclosed valve gate assemblies.
Figure 7 is a front elevational view of the valve gate assembly shown in Figure 6.
Figure 8 is a perspective view of a fourth embodiment of the disclosed valve gate assemblies.
Figure 9 is an enlarged cross-sectional view of a portion of the gate assembly shown in Figure 2.
Figures 10 and 11 are perspective views of the motor and transmission shown in Figure 2 having modified cooling arrangements.
Figure 12 is a top plan view showing the relative positions of two motors and associated transmissions assembled on a molding apparatus.

### DETAILED DESCRIPTION

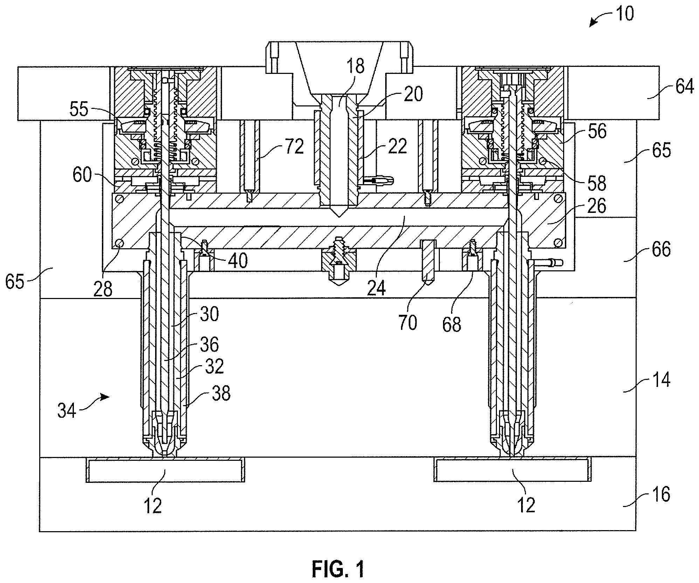

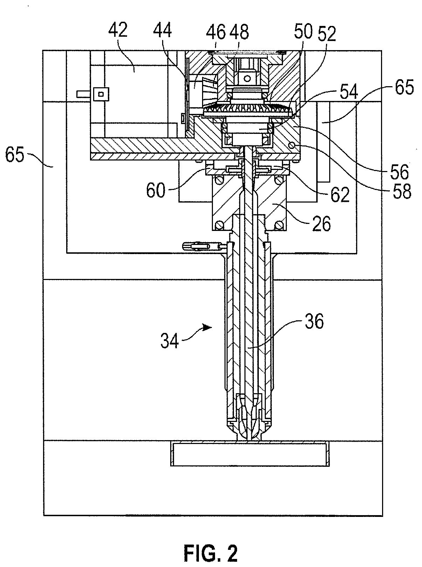

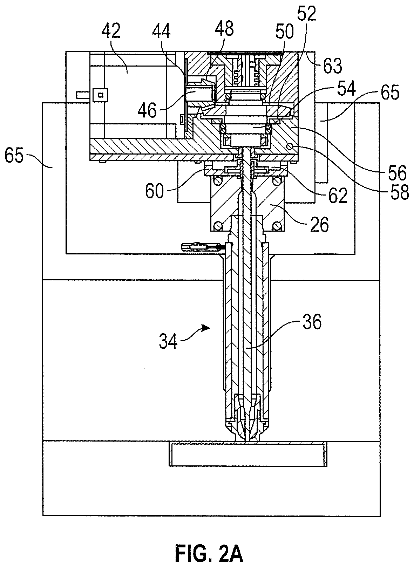

Shown in Figures 1 and 2 is a valve gate assembly 10 for use in delivering liquid resin (typically a molten thermoplastic composition) from an injection molding machine (not shown) to a mold cavity 12 defined by mold plates 14, 16. The resin flows from the injection molding machine into a channel 18 disposed in a sprue bushing 20 heated by electrical resistance heating element 22 and is distributed through manifold channels 24 defined in heated (or heatable) manifold 26. The heated manifold is provided with electrical resistance heating elements 28 capable of maintaining the resin at a desired temperature that facilitates flow. The resin flows from the manifold channels 24 into an annular space 30 defined between internal walls 32 of nozzles 34 and a valve pin 36 that is linearly movable within nozzle 34 along a vertical longitudinal axis of the nozzle between an open position (shown for the nozzle on the left in Figure 1) and a closed position (shown for the nozzle on the right in Figure 1). When the valve pin 36 is in the open position, liquid resin flows into mold cavity 12. Nozzles 34 are maintained at a temperature sufficient to keep the resin in a liquid (flowable) state by electrical resistance heating elements 38. Nozzles 34 can be provided with external threads 40 on the inlet end of the nozzle which engage internal threads of a bore through the bottom of manifold 26 to provide a fluid-tight seal. The mold can define a single cavity or multiple cavities, and each cavity can be supplied with resin from a single nozzle or multiple nozzles.

An electric motor 42 (Figure 2) having a rotating output shaft 44 is mechanically linked to valve pin 36 by a smaller bevel gear or drive gear 46 that has teeth 48 that mesh with teeth 50 of larger bevel gear or driven gear 52 to convert higher speed, lower torque rotation around the horizontally oriented output shaft 44 into lower speed, higher torque rotation along a vertical axis. The driven gear 52 can be mechanically coupled to a rotational-to-linear converter 54 (e.g., a screw and nut type arrangement) to convert rotational movement into linear (up and down) motion of valve pin 36 along a vertical axis generally coinciding with the longitudinal center line of cylindrical shaped nozzle 34. Gears 46 and 52, along with converter 54 constitute a suitable or preferred transmission assembly 55 for converting rotational movement of a horizontally oriented output shaft from motor 42 into linear vertical movement of valve pin 36. In the preferred embodiments, the gear ratio (i.e., rate of rotation of the drive shaft or gear to the driven shaft or gear) is greater than 2:1, preferably at least 3:1, and more preferably at least 4:1.

Figure 2A shows a variation on the valve gate assembly of Figures 1 and 2, wherein the top mold plate 64 is provided with a pocket or recess 63 that helps support the actuator (i.e., motor 42 and transmission). This arrangement also helps draw heat away from the motor and transmission by conduction (i.e., the pocket acts as a heat sink). More specifically, at least one of the electric motor and transmission is in thermal contact with a lower wall or surface of the cavity.

A cooling plate or block 56 having internal channels 58 for circulating a coolant fluid (e.g., water) is mounted or assembled (via spacer plate 60) on manifold 26. The cooling block and spacer plate (or adaptor plate) are entirely supported by and overlap the manifold. Preferably, cooling block 56 is spaced from manifold 26 by spacer plate 60, which can provide an air gap 62 between manifold 26 and cooling block 56, and minimize contact between cooling block 56 and adaptor/spacer plate 60. The thickness of spacer plate 60 (i.e., the distance between the top of manifold 26 and bottom of cooling block 56) can be from about 0,635cm (0.25 inch) to about 5,08cm (2 inches). In general, greater thickness is preferred to better thermally isolate motor 42 from the heated manifold 26, while less thickness is desired to provide a more compact molding apparatus with overall dimensions of the apparatus remaining relatively unaffected by the novel arrangement. In certain embodiments, spacer plate 60 can be a material resistant to conductive heat transfer. For example, certain stainless steels and titanium alloys have a thermal conductivity less than 20 W/mK. Certain ceramic materials can have even lower thermal conductivity.

Cooling block 56 is located in a space generally bounded by a top mold plate 64 and an intermediate mold plate 66 that includes perimeter or side walls 65 that surrounds the manifold, cooling blocks and at least portions of the transmission and motor.

Assembly 10 also includes various lower support elements 68, dowels 70, and upper support elements 72 for facilitating proper alignment and spacing of the components of the assembly.

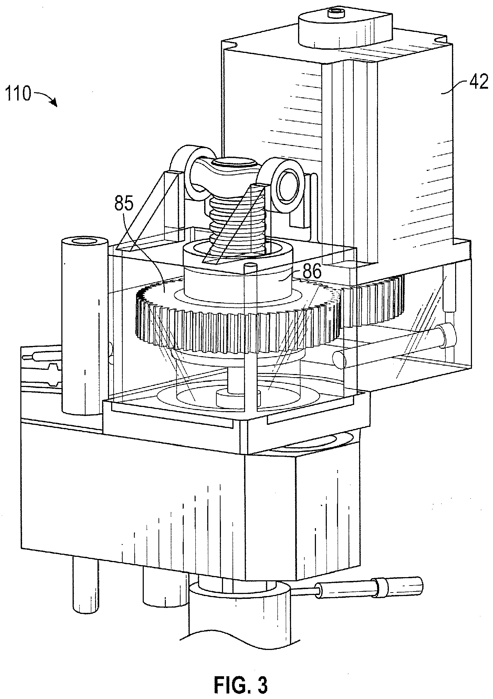

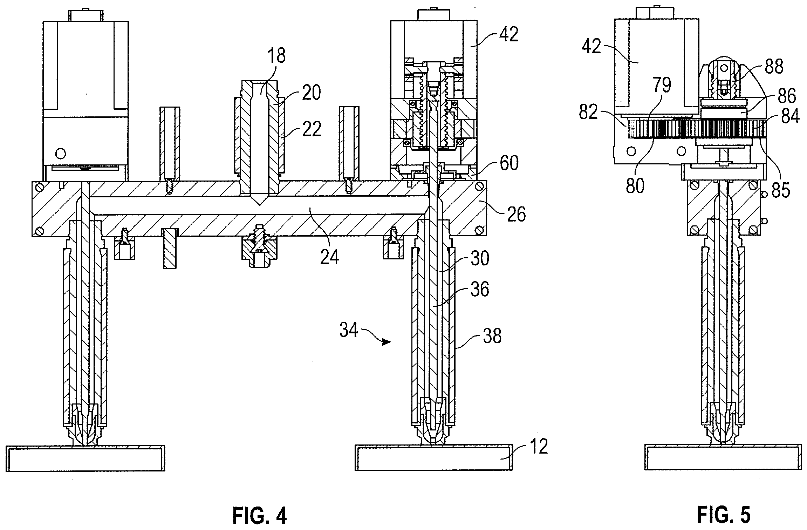

Shown in Figures 3-5 is an alternative embodiment 110 in which the motor 42 is arranged such that the output shaft 79 is vertically oriented and has a smaller gear 80 having teeth 82 that engage teeth 84 on a larger gear 85 to convert higher speed, lower torque rotation from output shaft 79 to lower speed, higher torque rotation of gear 85 and an associated shaft or hub 86. The transmission assembly may also include a rotation-to-linear motion conversion device 88 (e.g., a screw and nut type arrangement in which one of either the screw or nut is fixed) for converting the rotational movement of hub 86 into linear movement of valve pin 36. The assembly 110 is otherwise generally similar to assembly 10, with common or similar components having the same reference numerals as with the embodiment of Figures 1 and 2. Mold plates and other components that are not shown in Figures 3-5 can be, and preferably are, the same or similar to those shown in Figures 1 and 2.

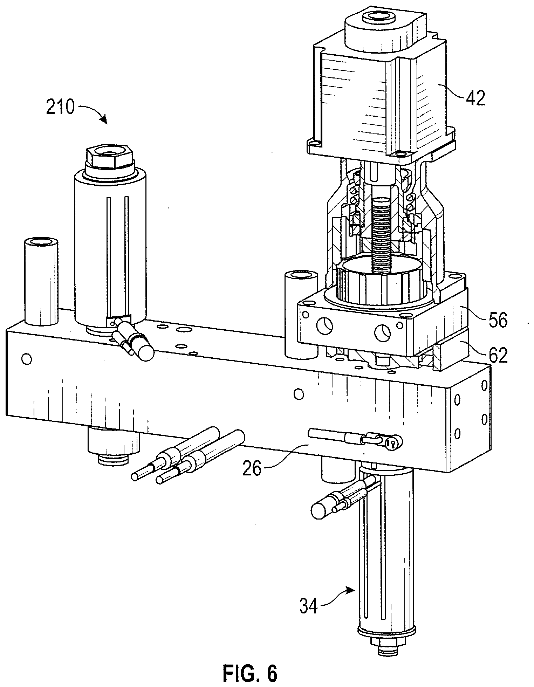

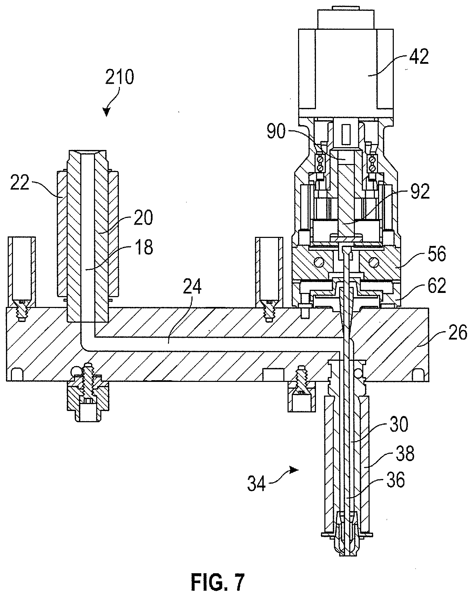

Shown in Figures 6 and 7 is another alternative embodiment 210 in which motor 42 is arranged such that the output shaft 90 is axially aligned with valve pin 36 and directly coupled to a rotary to linear converter 92 coupled to valve pin 36 to provide a transmission assembly in which rotary output from the motor is translated into linear motion for moving valve pin 36 upwardly and downwardly with bore channel 30 of nozzle 34. In this embodiment, a single manifold channel 24 facilitates flow of liquid resin to a single nozzle 34. However, generally any number of manifold channels and nozzles can be provided, the illustrated embodiments being a relatively simple design to facilitate understanding of the concepts and devices disclosed herein. Except as otherwise noted, the components of embodiment 210 are generally similar to or identical to those described with respect to the first and second embodiments 10 and 110, with such components being numbered as in the preceding embodiments.

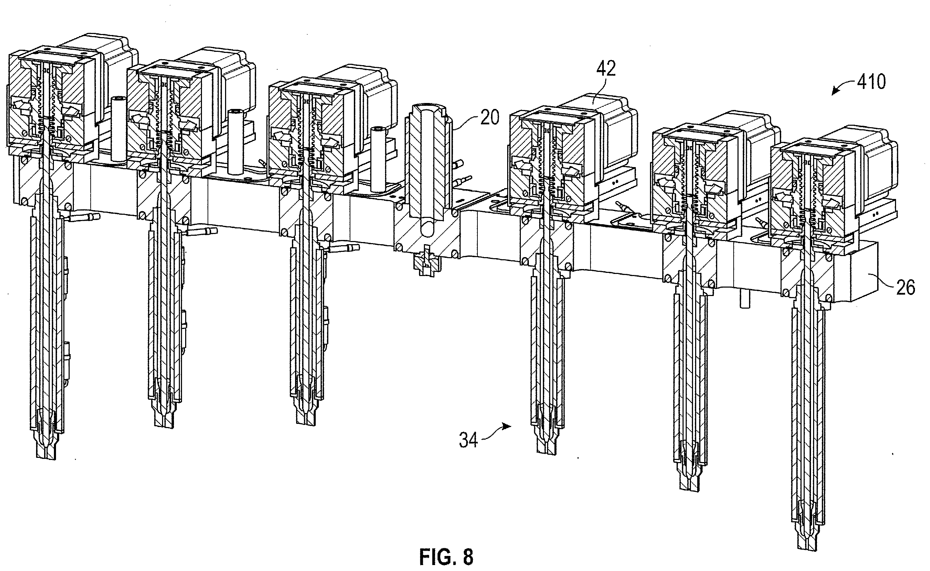

Shown in Figure 8 is another embodiment 410 having six motors 42 and nozzles 34. The various valve pins 36 can be driven at different velocities (e.g., v3 > v2 > v1) to deliver resin to different mold cavities or to different inlets of the same mold cavity of different rates. The individual velocities can be constant or can vary (accelerate and/or decelerate) independently. Also, the opening and closing speeds can be different at each nozzle. This ability to precisely control resin flow differently to different parts of the mold cavity can be tuned to optimize production quality and/or production rate.

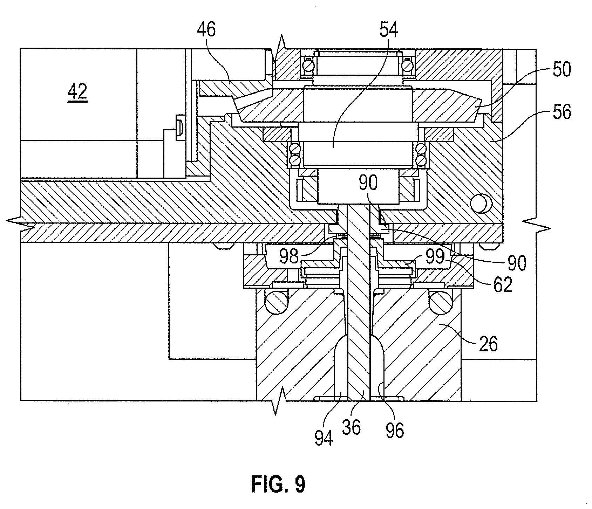

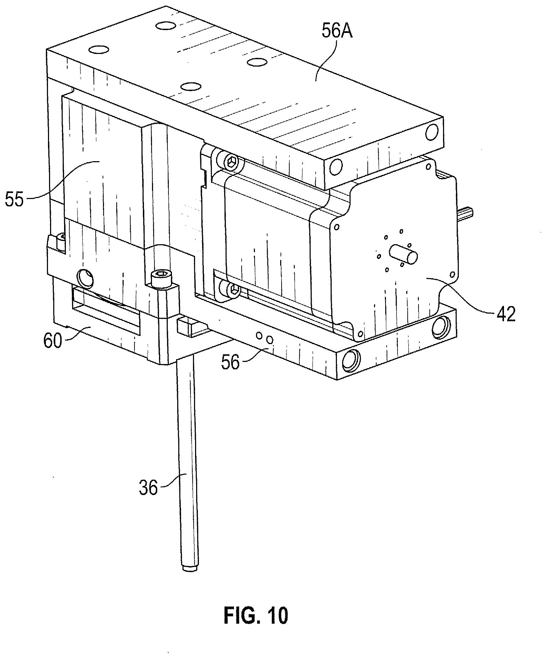

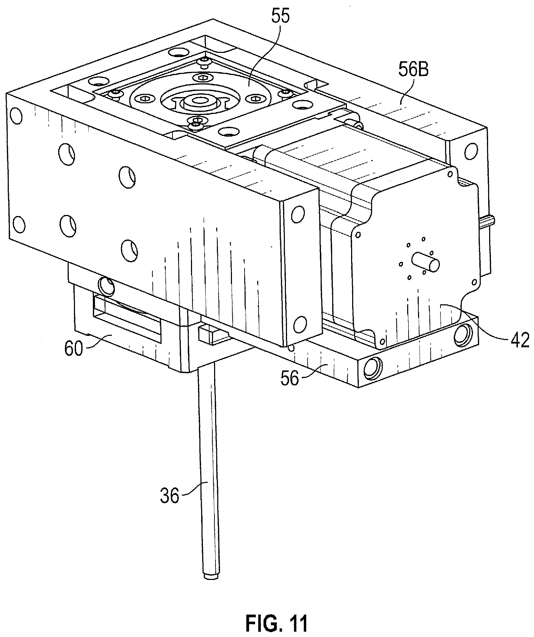

As best illustrated in Figure 9, a leak protection bushing 90 defines an annular collar-like structure having a flange portion 92 that provides a seal between manifold walls 96 and valve pin 36. Bushing 90 is urged against a valve pin opening through cooling block 56 to prevent plastic fluid from leaking into the transmission (e.g., gears and/or converter). For example, a spring washer 98 can be used to urge bushing 90 against the valve pin opening. In the illustrated embodiments, cooling block 56 is supported on manifold 26 (via adapting plate 60) and supports both motor 42 and the transmission assembly. However, it will be appreciated that multiple cooling blocks can be used (e.g., a first cooling block for the transmission assembly and a second cooling block for the motor). Figure 2 shows only a single cooling block 56 disposed between spacer block 60 and the transmission assembly 55 (e.g., comprised of gears 46 and 48). However, in certain applications, it may be desirable to add an upper cooling block 56A (Figure 10), a side cooling block 56B (Figure 11) or a combination of both a side cooling block 56A and an upper cooling block 56B can be used together with the lower cooling block 56.

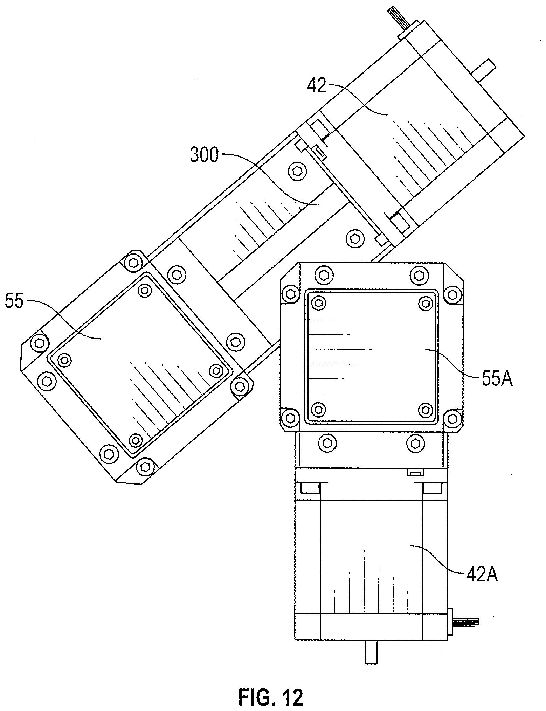

In certain applications, it may be desirable to use an extended or elongated motor shaft 300 (Figure 12) to create a space between the transmission assembly 55 and motor 42 to create a space that allows positioning of a second motor 42A and transmission 55A in closer proximity to motor 42 and transmission 55 than would otherwise be possible. This allows greater flexibility for positioning nozzles in the molding apparatus.

The arrangement or embodiments described herein provide a compact mold design that facilitates mounting of electric motors and transmission assemblies on the hotrunner manifold and within the space provided for the manifold by the design of the assembled mold plates. The use of electric motors that are cooled within the space generally provided for the hotrunner manifold provides precise and reliable adjustment of the value pin position and movement, which has advantages in terms of production rates, quality and reduced waste and damage.

The above description is intended to be illustrative, not restrictive.

## Claims

1. A valve gate assembly (10) for an injection molding apparatus having a least one hotrunner, comprising:
a manifold (26) defining a resin channel for conveying liquid resin from an injection molding machine toward a mold cavity;
a nozzle (34) disposed on a lower surface of the heated manifold;
a valve pin (36) configured for linear movement within and along a longitudinal axis of the nozzle to control flow through the nozzle;
an electric motor (42) and transmission configured to drive the valve pin; and
a cooling block (56) or cooling blocks assembled on the heated manifold ( 2 6 ) and supporting the electric motor and transmission, an adaptor plate (60) is disposed between the manifold and the cooling block,
**characterized in that**:
- the adaptor plate (60) is made of a material resistant to conductive heat transfer having a thermal conductivity less than 20W/mK, comprising one of the materials stainless steels, titanium alloys, ceramic materials.

2. The assembly of claim 1, wherein the cooling block or blocks extend along the sides of the motor.

3. The assembly of any of the claims 1 to 2, wherein the cooling block or cooling blocks extend over a top of the motor and/or extend along the sides and over a top of the motor.

4. The assembly of any of the claims 1 to 3, wherein the electric motor has a rotary output shaft.

5. The assembly of any of the claims 1 to 4, wherein the transmission comprises rotary to linear converter.

6. The assembly of any of the claims 1 to 5, wherein the rotary output shaft has a horizontal axis of rotation and the transmission comprises a first bevel gear coupled to the output shaft, a second bevel gear on a driven shaft having a vertical axis of rotation, the first bevel gear meshed with the second bevel gear, and a rotary to linear converter for converting rotation of the driven shaft to linear movement of the valve pin.

7. The assembly of claim 6, wherein the gear ratio is greater than 2:1 and preferably wherein the gear ratio is 3:1 or greater.

8. The assembly of any of the claims 1 to 7, wherein the rotary output shaft has a vertical axis of rotation and the transmission comprises a first gear coupled to the output shaft and a second gear on a driven shaft having a vertical axis, the first gear meshed with the second gear, and a rotary to linear converter for converting rotation of the driven shaft to linear movement of the valve pin.

9. The assembly of any of the claims 1 to 8, wherein the adaptor plate (60) defines a spacing between the cooling plate and the manifold that is less than (2 inches) 5,08 cm. and/or
wherein the adaptor plate (60) defines a spacing between the cooling plate and the manifold that is greater than (0.25 inch) 0,635cm.

10. The assembly of any of the claims 1 to 9, wherein the adaptor plate (60) defines an air gap between a bottom of the cooling plate and a top of the manifold.

## Patentansprüche

1. Nadelverschlussbaugruppe (10) für eine Spritzgießvorrichtung mit mindestens einem Heißkanal, umfassend:
einen Verteiler (26), der einen Kunststoffkanal zum Fördern von flüssigem Kunststoff von einer Spritzgießmaschine zu einem Formhohlraum definiert;
eine Düse (34), die an einer unteren Fläche des beheizten Verteilers angeordnet ist;
einen Ventilstift (36), der für eine lineare Bewegung innerhalb und entlang einer Längsachse der Düse konfiguriert ist, um den Durchfluss durch die Düse zu steuern;
einen Elektromotor (42) und ein Getriebe, die so konfiguriert sind, dass sie den Ventilstift antreiben; und
einen Kühlblock (56) oder Kühlblöcke, die auf dem beheizten Verteiler ( 2 6 ) montiert sind und den Elektromotor und das Getriebe tragen,
eine Adapterplatte (60), die zwischen dem Verteiler und dem Kühlblock angeordnet ist,
**dadurch gekennzeichnet, dass**:
die Adapterplatte (60) aus einem wärmeleitfähigen Material mit einer Wärmeleitfähigkeit von weniger als 20 W/mK besteht, das einen der Werkstoffe Edelstahl, Titanlegierungen, Keramikwerkstoffe umfasst.

2. Die Baugruppe nach Anspruch 1, wobei sich der Kühlblock oder die Kühlblöcke entlang der Seiten des Motors erstrecken.

3. Die Baugruppe nach einem der Ansprüche 1 bis 2, wobei sich der Kühlblock oder die Kühlblöcke über eine Oberseite des Motors und/oder entlang der Seiten und über eine Oberseite des Motors erstrecken.

4. Die Baugruppe nach einem der Ansprüche 1 bis 3, wobei der Elektromotor eine rotierende Antriebswelle aufweist.

5. Die Baugruppe nach einem der Ansprüche 1 bis 4, wobei das Getriebe einen rotierenden in einen linearen Wandler umfasst.

6. Die Baugruppe nach einem der Ansprüche 1 bis 5, wobei die drehbare Antriebswelle eine horizontale Drehachse hat und das Getriebe ein erstes Kegelrad, das mit der Antriebswelle gekoppelt ist, ein zweites Kegelrad auf einer angetriebenen Welle mit vertikaler Drehachse, wobei das erste Kegelrad mit dem zweiten Kegelrad in Eingriff steht, und einen Dreh-Linear-Wandler zur Umwandlung der Drehung der angetriebenen Welle in eine lineare Bewegung des Ventilstifts umfasst.

7. Die Baugruppe nach Anspruch 6, wobei das Übersetzungsverhältnis größer als 2:1 ist und vorzugsweise das Übersetzungsverhältnis 3:1 oder größer ist.

8. Die Baugruppe nach einem der Ansprüche 1 bis 7, wobei die drehbare Abtriebswelle eine vertikale Drehachse aufweist und das Getriebe ein erstes Zahnrad, das mit der Abtriebswelle gekoppelt ist, und ein zweites Zahnrad auf einer angetriebenen Welle mit vertikaler Achse, wobei das erste Zahnrad mit dem zweiten Zahnrad in Eingriff steht, sowie einen Dreh-Linear-Wandler zur Umwandlung der Drehung der angetriebenen Welle in eine lineare Bewegung des Ventilstifts umfasst.

9. Die Baugruppe nach einem der Ansprüche 1 bis 8, wobei die Adapterplatte ( 6 0 ) einen Abstand zwischen der Kühlplatte und dem Verteiler definiert, der weniger als (2 Zoll) 5,08 cm beträgt.
und/oder
wobei die Adapterplatte (60) einen Abstand zwischen der Kühlplatte und dem Verteiler definiert, der größer als ( 0.25 Zoll) 0,635 cm ist.

10. Die Baugruppe nach einem der Ansprüche 1 bis 9, wobei die Adapterplatte (60) einen Luftspalt zwischen einer Unterseite der Kühlplatte und einer Oberseite des Verteilers definiert.

## Revendications

1. Un ensemble de buse obturatrice à aiguille (10) pour un appareil de moulage par injection ayant au moins un canal chaud, comprenant :
un collecteur (26) définissant un canal de résine pour transporter la résine liquide d'une machine de moulage par injection vers une cavité de moulage ;
une buse (34) disposée sur une surface inférieure du collecteur chauffé ;
une tige de soupape (36) configurée pour un mouvement linéaire à l'intérieur et le long d'un axe longitudinal de la buse pour commander l'écoulement à travers la buse;
un moteur électrique (42) et une transmission configurés pour entraîner la tige de soupape ; et
un bloc de refroidissement (56) ou des blocs de refroidissement assemblés sur le collecteur chauffé (26) et supportant le moteur électrique et la transmission,
une plaque adaptatrice (60) disposée entre le collecteur et le bloc de refroidissement, **caractérisé en ce que**
la plaque adaptatrice (60) est réalisée en un matériau résistant au transfert de chaleur de conduction ayant une conductivité thermique inférieure à 20 W/mk, comprenant un des matériaux suivants : aciers inoxydable, alliage de titane, matériaux céramiques.

2. L'ensemble selon la revendication 1 ou 2, dans lequel le ou les blocs de refroidissement s'étend(ent) le long des côtés du moteur.

3. L'ensemble selon l'une quelconque des revendications 1 à 2, dans lequel le bloc de refroidissement ou les blocs de refroidissement s'étendent sur une partie supérieure du moteur et/ou s'étendent le long des côtés et sur une partie supérieure du moteur.

4. L'ensemble selon l'une quelconque des revendications 1 à 3, dans lequel le moteur électrique a un arbre de sortie rotatif.

5. L'ensemble selon l'une quelconque des revendications 1 à 4, dans lequel la transmission comprend un convertisseur rotatif-linéaire.

6. L'ensemble selon l'une quelconque des revendications 1 à 5, dans lequel l'arbre de sortie rotatif a un axe de rotation horizontal et la transmission comprend un premier engrenage conique couplé à l'arbre de sortie, un deuxième engrenage conique sur un arbre entraîné ayant un axe de rotation vertical, le premier engrenage conique en prise avec le second engrenage conique, et un convertisseur rotatif-linéaire pour convertir la rotation de l'arbre entraîné en un mouvement linéaire de la tige de soupape.

7. L'ensemble selon la revendication 6, dans lequel le rapport d'engrenage est supérieur à 2:1 et de préférence dans lequel le rapport d'engrenage est de 3:1 ou plus.

8. L'ensemble selon l'une quelconque des revendications 1 à 7, dans lequel l'arbre de sortie rotatif a un axe de rotation vertical et la transmission comprend un premier engrenage couplé à l'arbre de sortie et un deuxième engrenage sur un arbre entraîné ayant un axe vertical, le premier engrenage en prise avec le deuxième engrenage, et un convertisseur rotatif-linéaire pour convertir la rotation de l'arbre entraîné en un mouvement linéaire de la tige de soupape.

9. L'ensemble selon l'une quelconque des revendications 1 à 8, dans lequel la plaque adaptatrice (60) définit un espacement entre la plaque de refroidissement et le collecteur qui est inférieur à 5,08 cm (2 pouces) et/ou
dans lequel la plaque adaptatrice (60) définit un espacement entre la plaque de refroidissement et le collecteur qui est supérieur à 0.635cm (0,25 pouce).

10. L'ensemble selon l'une quelconque des revendications 1 à 9, dans lequel la plaque adaptatrice (60) définit un espace d'air entre un fond de la plaque de refroidissement et un sommet du collecteur.
